Europäisches Patentamt

European Patent Office

Office européen des brevets

(19)

(11) Veröffentlichungsnummer: **0 059 824**
**B1**

(12)

# EUROPÄISCHE PATENTSCHRIFT

(45) Veröffentlichungstag der Patentschrift:
**21.11.84**

(51) Int. Cl.³: **B 60 N 3/02**, B 60 N 1/06

(21) Anmeldenummer: **82100188.0**

(22) Anmeldetag: **13.01.82**

(54) Polsterkörper für den Innenraum von Fahrzeugen, insbesondere Armlehne.

(30) Priorität: **28.02.81 DE 3107760**

(43) Veröffentlichungstag der Anmeldung:
**15.09.82 Patentblatt 82/37**

(45) Bekanntmachung des Hinweises auf die Patenterteilung:
**21.11.84 Patentblatt 84/47**

(84) Benannte Vertragsstaaten:
**FR GB IT SE**

(56) Entgegenhaltungen:
**AU - A - 36 111**
**DE - A - 1 655 624**
**DE - B - 1 238 795**
**DE - B - 2 906 288**
**FR - A - 2 261 898**
**US - A - 2 088 709**

(73) Patentinhaber: **Gebr. Happich GmbH,**
**Postfach 10 02 49 Clausenbrücke 1,**
**D-5600 Wuppertal 1 (DE)**

(72) Erfinder: **Janz, Joachim, Jägerhofstrasse 116 b,**
**D-5600 Wuppertal 1 (DE)**
Erfinder: **Henne, Helmut, Thorner Strasse 24,**
**D-5600 Wuppertal 2 (DE)**

**Beschreibung**

Die Erfindung bezieht sich auf eine Armlehne der im Oberbegriff des Anspruchs 1 erwähnten Art.

Aus der DE-B-2 906 288 ist ein, insbesondere als Armlehne ausgebildeter Polsterkörper für den Innenraum von Fahrzeugen bekanntgeworden, der aus elastischem Schaumkunststoff mit einer darin eingebetteten Einlage besteht und mit über die Anschlußebene vorstehenden Befestigungselementen ausgerüstet ist, wobei diese Befestigungselemente in zugehörige Einführöffnungen einsteckbare und/oder einklipsbare Nocken sind, die Teile der Einlage darstellen. Demgemäß handelt es sich bei der Einlage dieses bekannten Polsterkörpers um ein formstabiles Bauteil, welches separat hergestellt werden muß und daher den Einsatz von zusätzlichen Fertigungsvorrichtungen erforderlich macht. Da die Einlage bei dem bekannten Polsterkörper aus Kunststoff bestehen soll, ist für die Herstellung der mit Befestigungselementen ausgebildeten Einlage eine mit entsprechenden Werkzeugen zu bestückende Kunststoff-Spritzgußmaschine erforderlich. Die separat hergestellte Einlage muß bei der Herstellung des eigentlichen Polsterkörpers auch exakt in einer Schäumform positioniert werden, bevor der Schäumprozeß eingeleitet werden kann. Damit ist die Herstellung dieses bekannten Polsterkörpers relativ kompliziert, aufwendig und teuer.

Aus der DE-C-2 408 238 (und FR-A-2 261 898) ist ein weiterer, insbesondere als Armlehne ausgebildeter Polsterkörper für den Innenraum von Fahrzeugen bekanntgeworden, der aus elastischem Schaumkunststoff mit einer darin eingebetteten Einlage besteht und mit einem über die Anschlußebene vorstehenden Befestigungselement ausgerüstet ist, wobei dieses Befestigungselement ein in eine zugehörige Einführöffnung einrenkbarer Zapfen ist, der einen Teil der Einlage darstellt. Bei diesem bekannten Polsterkörper liegen die Herstellungsbedingungen somit ähnlich, wie die beim Gegenstand der weiter oben erörterten DE-B-2 906 288. Hinzu kommt, daß mit dem Befestigungselement nur eine vorläufige Festlegung des Polsterkörpers an einem Karosserieteil vorgenommen werden kann. Die endgültige Festlegung des Polsterkörpers erfolgt dann durch in das Karosserieteil einzudrehende Schrauben, deren Kopf sich jeweils an der formstabilen Einlage abstützt. Die Ausrüstung des Polsterkörpers mit Befestigungselementen ist somit ebenso aufwendig, arbeitsintensiv und damit teuer wie das Anbringen des Polsterkörpers an Karosserieteilen von Fahrzeugen.

Die der Erfindung zugrunde liegende Aufgabe besteht nun darin, einen Polsterkörper zu schaffen, der besonders einfach herzustellen und zu montieren ist.

Die Lösung dieser Aufgabe ist im kennzeichnenden Teil des Anspruchs 1 angegeben. Die besonderen Vorteile der Erfindung werden darin gesehen, daß nunmehr sämtliche Befestigungselemente vorteilhafterweise in einem Arbeitsgang materialeinheitlich mit dem Polsterkörper ausgebildet sind. Dabei ist die erforderliche Stabilität der Befestigungselemente durch jeweils einen in jedem Befestigungselement eingelagerten Bereich der Einlage gewährleistet. Auch ist die Montage des Polsterkörpers wesentlich vereinfacht, weil anstelle einer aufwendigen Schraubarbeit od. dgl. nur noch ein Einstecken und/oder Einklipsen der Befestigungselemente in zugehörige Einführöffnungen erfolgt. Da ja die Befestigungselemente im wesentlichen aus Schaumkunststoff bestehen, bringt das Einklipsen keinerlei Probleme mit sich.

Während die Einlagen herkömmlicher Polsterkörper im allgemeinen aus einem formstabilen Material bestehen, sieht die Erfindung eine Einlage in Form einer Matte vor, wobei es sich als besonders vorteilhaft erwiesen hat, die Matte als Glasstapelfasergewebe auszubilden. Wie Versuche gezeigt haben, bringt in überraschender Weise die Matte, offenbar durch die Verwirkung mit dem Schaumkunststoff, die den technischen Anforderungen vollauf genügende Festigkeit für den Polsterkörper, insbesondere aber auch für die Befestigungselemente. Bei der Herstellung des Polsterkörpers werden aus der Matte lediglich Materiallappen freigeschnitten, welche die Einlagen für die Befestigungselemente bilden. Die Matte wird in eine Unterform eingelegt und hiernach der Schäumvorgang in gewohnter Weise vorgenommen. Überraschenderweise schwimmt die Matte beim Schäumvorgang nicht wesentlich in der Schäumform auf, sondern verbleibt im rückseitigen Bereich des Polsterkörpers und bewirkt die erforderliche Festigkeit.

Weitere wesentliche Merkmale und vorteilhafte Ausgestaltungen der Erfindung sind in den Ansprüchen 4 bis 7 gekennzeichnet.

Im folgenden wird die Erfindung anhand von in der Zeichnung dargestellter Ausführungsbeispiele näher erläutert. Es zeigt

Fig. 1 eine Türverkleidung mit einem Polsterkörper,

Fig. 2 einen vertikalen Teilschnitt durch die Türverkleidung mit Polsterkörper nach Fig. 1,

Fig. 3 einen Teilschnitt ähnlich dem nach Fig. 2, wobei jedoch der Polsterkörper eine abgewandelte Ausführungsform besitzt und

Fig. 4 eine schaubildliche Ansicht auf die Rückseite des Polsterkörpers nach Fig. 2.

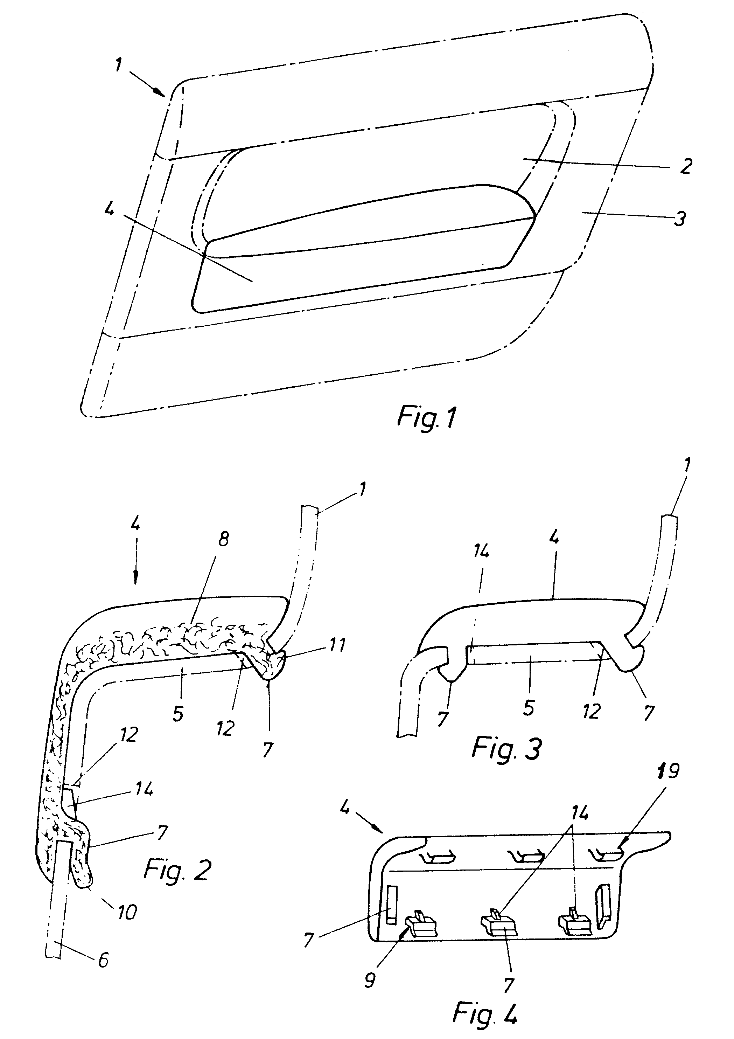

Fig. 1 zeigt eine Türtafel 1 mit einer Einwölbung 2 und einer Auswölbung 3. Die Türtafel 1 besteht aus einer relativ biegesteifen, vorgeformten Platte aus Preßpappe od. dgl. Im Bereich der Auswölbung 3 ist ein Polsterkörper angeordnet, der hier als Armauflage 4 ausgebildet ist. Die Armauflage 4 weist ein winkelförmiges Querschnittsprofil auf, wobei der eine Schenkel auf einem abgewinkelten, etwa horizontalen Abschnitt 5 der Auswölbung 3 der Türtafel 1 liegt und der andere Schenkel auf einer im wesentlichen vertikal verlaufenden Wandungsfläche 6

der Türtafel 1 liegt (vgl. Fig. 2).

Die Armauflage 4 ist aus Schaumkunststoff gebildet und weist rückseitig Befestigungselemente 7 auf. Der Polsterkörper ist einstückig und materialeinheitlich mit den Befestigungselementen 7 ausgebildet und durch eine mit Abschnitten auch in die Befestigungselemente 7 reichende Einlage ausgesteift, die aus einer vornehmlich als Glasstapelfasergewebe ausgebildeten Matte 8 besteht.

Die als Nocken ausgebildeten Befestigungselemente 7 sind jeweils in der Nähe der im wesentlichen parallel zueinander verlaufenden Längsränder des Polsterkörpers derart angeordnet, daß sie, wie insbesondere Fig. 2 und 4 zeigen, jeweils eine aus mehreren in Reihe nebeneinander angeordneten Nocken bestehende Nockenreihe bilden (siehe Fig. 4). Die Nocken der ersten Nockenreihe 9 sind als Einhängelaschen 10 und die Nocken der anderen Nockenreihe 19 als Klipskörper 11 ausgebildet, die jeweils entgegengesetzt gerichtete Abwinklungen aufweisen.

Bei der Montage des Polsterkörpers bzw. hier der Armauflage 4 wird so vorgegangen, daß zunächst die Einhängelaschen 10 der ersten Nockenreihe 9 in die zugehörigen Einführöffnungen 12 eingehängt und dann, nach einer leichten Drehbewegung des Polsterkörpers, die Klipskörper 11 in die zugehörigen Einführöffnungen 12 eingesteckt bzw. eingeklipst werden. Aufgrund der durch die entgegengesetzten Abwinklungen der Einhängelaschen 10 und Klipskörper 11 gebildeten Hinterschnitte ist eine zuverlässige Festlegung des Polsterkörpers gegeben. Ein etwa mögliches Abheben oder Verschieben des Polsterkörpers ist wirkungsvoll durch Anschlagnocken 14 verhindert, welche an der den Abwinklungen abgewandten Seite der Einhängelaschen 10 angeformt sind und sich gegen den Rand der zugehörigen Einführöffnung 12 abstützen. Gemäß Fig. 4 können auch an den Endbereichen des Polsterkörpers noch zusätzliche Befestigungselemente 7 angeformt sein.

Beim Ausführungsbeispiel nach Fig. 3 ist ein ebenfalls als Armauflage 4 ausgebildeter Polsterkörper vorgesehen, bei dem lediglich kein senkrecht verlaufender Schenkel vorhanden ist, bei dem aber bezüglich der Anordnung und Ausbildung, insbesondere in bezug auf die Befestigungselemente 7, die gleichen Verhältnisse wie vorbeschrieben gegeben sind.

Die Befestigungselemente 7 sind, verglichen z. B. mit Schrauben, relativ großvolumig ausgebildet. Durch die großvolumige Ausbildung ergeben sich aber entsprechend große Anlageflächen, so daß die Polsterkörper auch an Karosserieteilen oder auch Karosserieverkleidungen angebracht werden können, in denen Schrauben keinen ausreichenden Halt finden.

## Patentansprüche

1. Polsterkörper für den Innenraum von Fahrzeugen, insbesondere Armlehne, der aus elastischem Schaumkunststoff mit einer darin eingebetteten Einlage besteht und der mit über die Anschlußebene vorstehenden, in zugehörige Einführöffnungen einsteckbaren und/oder einklipsbaren Befestigungselementen (7) ausgerüstet ist, dadurch gekennzeichnet, daß die Befestigungselemente (7) einstückig und materialeinheitlich mit dem Polsterkörper ausgebildete Nocken sind, und daß jeder Nocken einen darin eingeschäumten Bereich der Einlage aufweist.

2. Polsterkörper nach Anspruch 1, dadurch gekennzeichnet, daß die Einlage aus einer Matte (8) besteht.

3. Polsterkörper nach Anspruch 2, dadurch gekennzeichnet, daß die Matte (8) als Glasstapelfasergewebe ausgebildet ist.

4. Polsterkörper nach einem oder mehreren der Ansprüche 1 bis 3, dadurch gekennzeichnet, daß er im wesentlichen parallel zueinander verlaufende Längsränder und abgerundete Enden aufweist, wobei den Längsrändern eng benachbart jeweils eine aus mehreren Nocken bestehende Nockenreihe (9, 19) ausgebildet ist.

5. Polsterkörper nach Anspruch 4, dadurch gekennzeichnet, daß die Nocken der ersten Nockenreihe (9) als Einhängelaschen (10) und die Nocken der anderen Nockenreihe (19) als Klipskörper (11) ausgebildet sind, die jeweils entgegengesetzt gerichtete Abwinklungen aufweisen.

6. Polsterkörper nach Anspruch 5, dadurch gekennzeichnet, daß an der Wurzel der als Einhängelaschen (10) ausgebildeten Nocken, und zwar an der den Abwinklungen abgewandten Seite, jeweils ein gegen den benachbarten Rand der zugehörigen Einführöffnung (12) abstützbarer Anschlagnocken (14) angeformt ist.

7. Polsterkörper nach einem oder mehreren der Ansprüche 1 bis 6, gekennzeichnet durch ein winkelförmiges Querschnittsprofil.

## Claims

1. A cushioned member for the interior of vehicles, especially an arm-rest, comprising resilient foamed plastics material having an insert embedded therein and being provided with securing elements (7) which project beyond the connection plane and can be inserted in, and/or clipped into, associated guide openings, characterized in that the securing elements (7) are lugs which are formed integrally with the cushioned member and are of the same material as the latter, and in that each lug comprises a portion of the insert which is incorporated therein by foaming.

2. A cushioned member according to claim 1, characterized in that the insert comprises a mat (8).

3. A cushioned member according to claim 2, characterized in that the mat (8) is formed of a glass staple fibre woven material.

4. A cushioned member according to any one or more of claims 1 to 3, characterized in that it has substantially parallel longitudinal edges and rounded ends, with a plurality of lugs arranged as a row of lugs (9, 19) being formed in the immediate vicinity of each of the longitudinal edges.

5. A cushioned member according to claim 4, characterized in that the lugs of the first row (9) are formed as suspension straps (10), and the lugs of the other row (19) are formed as clip elements (11) which are each angled in opposite directions.

6. A cushioned member according to claim 5, characterized in that, at the root of each lug formed as a suspension strap (10) and at the side facing away from the angled portions, there is provided an integrally-formed stop lug (14) which can be braced against the adjacent end of the associated receiving opening (12).

7. A cushioned member according to any one or more of claims 1 to 6, characterized by an angled cross-sectional profile.

**Revendications**

1. Corps rembourré destiné à l'intérieur de véhicules, en particulier accoudoir, constitué par une mousse synthétique élastique dans laquelle est noyée une garniture et comportant des éléments de fixation (7) dépassant du plan de raccordement, pouvant être enfoncés et/ou agrafés dans des ouvertures d'introduction correspondantes, caractérisé en ce que les éléments de fixation (7) sont des ergots réalisés d'un seul tenant et avec homogénéité de matière avec le corps rembourré, et en ce qu'une zone de la garniture est incorporée dans la mousse de chaque ergot.

2. Corps rembourré selon la revendication 1, caractérisé en ce que la garniture est constituée par un mat (8).

3. Corps rembourré selon la revendication 2, caractérisé en ce que le mat (8) est constitué par un tissu de fibres de verre.

4. Corps rembourré selon l'une quelconque des revendications 1 à 3, caractérisé en ce qu'il comporte des bords longitudinaux sensiblement parallèles entre eux et des extrémités arrondies, une rangée d'ergots (9, 19) comprenant plusieurs ergots étant formée tout près de chacun des bords longitudinaux.

5. Corps rembourré selon la revendication 4, caractérisé en ce que les ergots de la première rangée (9) sont réalisés sous la forme de languettes d'accrochage (10) et les ergots de l'autre rangée (19) sous la forme de corps d'agrafage (11), qui présentent respectivement des coudes dirigés dans des sens opposés.

6. Corps de rembourrage selon la revendication 5, caractérisé en ce qu'un ergot de butée (14) s'appuyant sur le bord voisin de l'ouverture d'introduction (12) correspondante est formé au pied de chacune des cames réalisées sous forme de languettes d'accrochage (10), et en fait du côté opposé aux coudes.

7. Corps de rembourrage selon une ou plusieurs des revendications 1 à 6, caractérisé par un profil de section droite présentant un angle.

Fig.1

Fig. 2

Fig. 3

Fig. 4